# EUROPEAN PATENT SPECIFICATION

(11) **EP 1 580 659 B1**
(45) Date of publication and mention of the grant of the patent: **15.04.2009**
(21) Application number: 04257322.0
(22) Date of filing: 25.11.2004
(51) Int. Cl.: G06F 9/445, G06F 13/40

(54) **A method and system for configuration of processor integrated devices in multi-processor systems**
Verfahren und System zur Konfiguration von Prozessor-integrierten Vorrichtungen in einem Mehrprozessorsystem
Method et système pour la configuration de dispositifs intégrés dans un processeur, dans systèmes multiprocesseur

(30) Priority: 22.03.2004 US 806787
(43) Date of publication of application: 28.09.2005
(73) Proprietor: Intel Corporation, Santa Clara, CA 95052 (US)
(72) Inventor: Sethi, Prashant, Folsom, California 95630 (US); Creta, Kenneth C., Gig Harbour Washington 98335 (US); Tetrick, Raymond Scott, Portland Oregon 97229 (US)
(74) Representative: Want, Clifford James

(56) References cited:
- EP-A- 0 817 089
- US-A1- 2002 056 037
- "BIOS and Kernel Developer's Guide for AMD Athlon 64 and AMD Opteron Processors Revision 3.04"[Online] July 2003 (2003-07), XP002331271 Retrieved from the Internet: URL:http://web.archive.org/web/20031215002 416/http://www.amd.com/us-en/assets/conten t_type/white_papers_and_tech_docs/26094.PD F> [retrieved on 2005-06-08]
- "HyperTransport I/O Link Specification Revision 1.03"[Online] 10 October 2001 (2001-10-10), XP002331272 Retrieved from the Internet: URL:http://www.hypertransport.org/docs/spe c/HT_IOLink_Spec.pdf> [retrieved on 2005-06-08]
- FREESCALE SEMICONDUCTOR, INC.: "MPC8260 PowerQUICC II\TM Family Reference Manual Rev. 1.0"[Online] May 2003 (2003-05), Retrieved from the Internet: URL:http://www.freescale.com/files/product /doc/MPC8260UM.pdf> [retrieved on 2005-06-08]

## Description

### BACKGROUND

### 1. Field

This disclosure generally relates to configuration, specifically, relating to configuration of integrated devices incorporated within processors or network components in multi-processor systems.

### 2. Background Information

Presently, processors are incorporated along with other integrated devices, such as, memory controllers or coprocessors into a single integrated device package. The corresponding processor package is configurable by operating system (OS) plug-and-play configuration software. For example, the configuration software utilizes established configuration mechanism as defined by Peripheral Component Interconnect (PCI) or PCI Express specifications. Typically, the configuration mechanisms utilize memory or Input/Output (IO) mapped configuration region for generating configuration transactions on the respective interconnect.

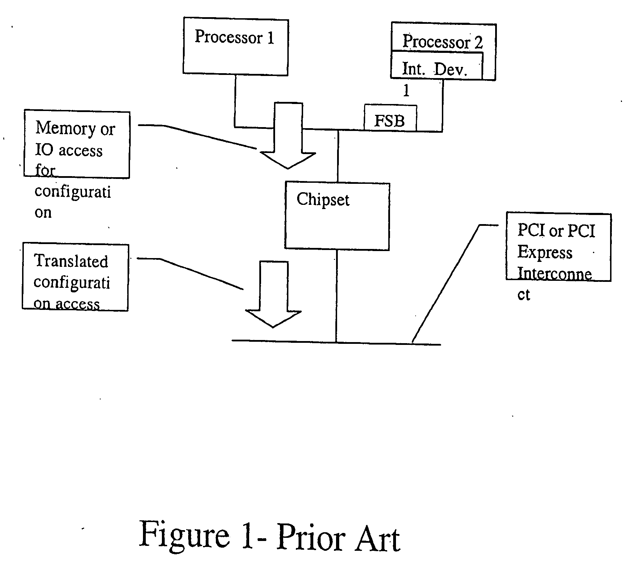

One example of configuration is done by a chipset, as depicted in connection with Figure 1. In order to configure Integrated Device 1 (incorporated within Processor 2), a chipset translates the required configuration cycle. Therefore, the chipset needs to route the configuration cycle from either processor 1 or processor 2 back to processor 2. However, current generation processor buses do not have supported configuration cycles for this routing. Another configuration example is the processor internally decoding the memory or IO access for configuration and not generating an access to the chipset for the integrated device 1. However, this does not allow for configuration accesses from processor 1 to be routed to the integrated device 1 in processor 2 due to lack of configuration cycles on current processor buses. In yet another example, shrink wrap operating systems may be used for configuration. However, they do not support situations where an integrated device is visible from some processors but not others.

"BIOS and kernel developer's guide for AMD Athlon™ 64 and AMD Opteron™ processors", Advanced Micro Devices, Inc.. Publication No. 26094, July 2003 discloses a multiple processor system in which a bootstrap processor has a HyperTransport^{™} link connected to a HyperTransport^{™} I/O hub. The bootstrap processor is responsible for the execution of a BIOS POST and initialisation of the remaining application processors, including detection of the application processors starting from its adjacent processor, noncoherent HyperTranspot device initialization and routing table initialization.

"HyperTransport^{™} I/O link specifcation" revision 1.03, HyperTransport^{™} Technology Consortium, 10 October 2001 discloses a high-speed, packet-based, point-to-point link for interconnecting integrated circuits on a board, for example between a CPU, memory and I/O devices. The technology implements configuration space similar to PCI and requires two types, Type 0 and Type 1, of configuration cycles, for accessing devices on a current bus and to transmit configuration cycles over intermediate buses, respectively. Unlike PCI, Type 0 access contain the device number, because all HyperTransport technology devices know what their device numbers are. Unlike PCI, all Type 1 access can flow upstream and must be forwarded by HyperTransport-to-HyperTransport bridges, as well as hosts that support sharing double-hosted chains. Furthermore, these devices must support Type 1-to-Type 0 conversion upstream in addition to downstream and when re-issuing peer-to-peer cycles downstream.

Freescale Semiconductor Inc. "MPC82660 PowerQUICC II^{™} Family reference Manual," Rev. 1.0, May 2003 discloses that a communications processor PowerQUICC II which integrates on one chip a microprocessor and a system integration unit can act as a PCI agent and that a host processor may be coupled to this core.

According to a first aspect of the present invention, there is provided a method for configuring an integrated device in a first processor as claimed in claim 1.

According to a second aspect of the invention, there is provided a processor as claimed in claim 5.

According to a third aspect of the invention, there is provided a system as claimed in claim 6.

Further embodiments of the invention are included in the dependent claims.

### BRIEF DESCRIPTION OF THE DRAWINGS

Subject matter is particularly pointed out and distinctly claimed in the concluding portion of the specification. The claimed subject matter, however, both as to organization and method of operation, together with objects, features, and advantages thereof, may best be understood by reference to the following detailed description when read with the accompanying drawings in which:
FIG. 1 is a prior art method of a flowchart for configuration of an integrated device by a chipset.
FIG. 2 is an apparatus to facilitate configuration of an integrated device by a processor in accordance with the claimed subject matter.
FIG. 3 is a system diagram illustrating a system that may employ the embodiment of FIG. 2 or Figure 4 or both.
FIG. 4 is a decoder as utilized by one embodiment.

### DETAILED DESCRIPTION

In the following detailed description, numerous specific details are set forth in order to provide a thorough understanding of the claimed subject matter. However, it will be understood by those skilled in the art that the claimed subject matter may be practiced without these specific details. In other instances, well-known methods, procedures, components and circuits have not been described in detail so as not to obscure the claimed subject matter.

An area of current technological development relates to being able to configure integrated devices within a processor or network component. As previously described, chipsets translate the configuration cycle. Also, prior art configuration schemes are not supported by processor buses for multiprocessor systems.

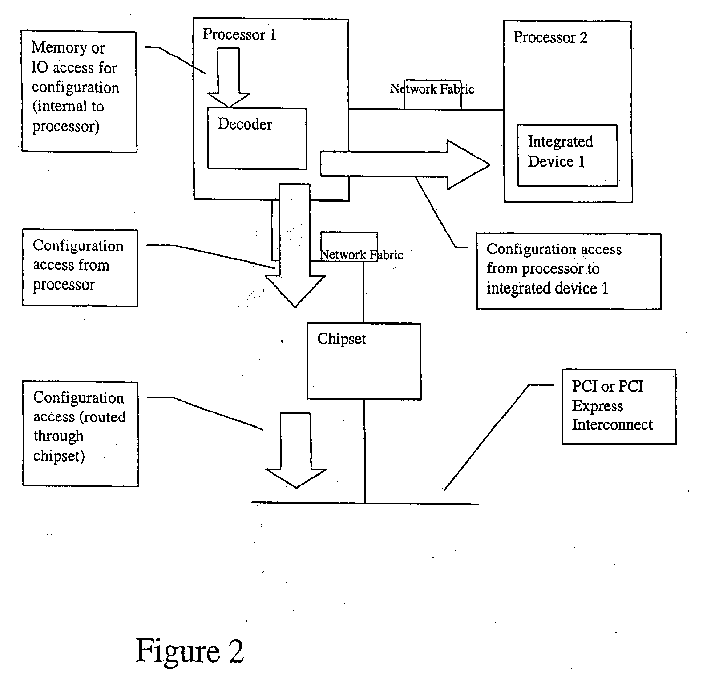

In contrast, the claimed subject matter supports configuration by facilitating translation of the memory or IO mapped configuration access from a processor to a PCI or PCI Express configuration cycle and is done natively by the processor, as depicted in connection with Figure 2.

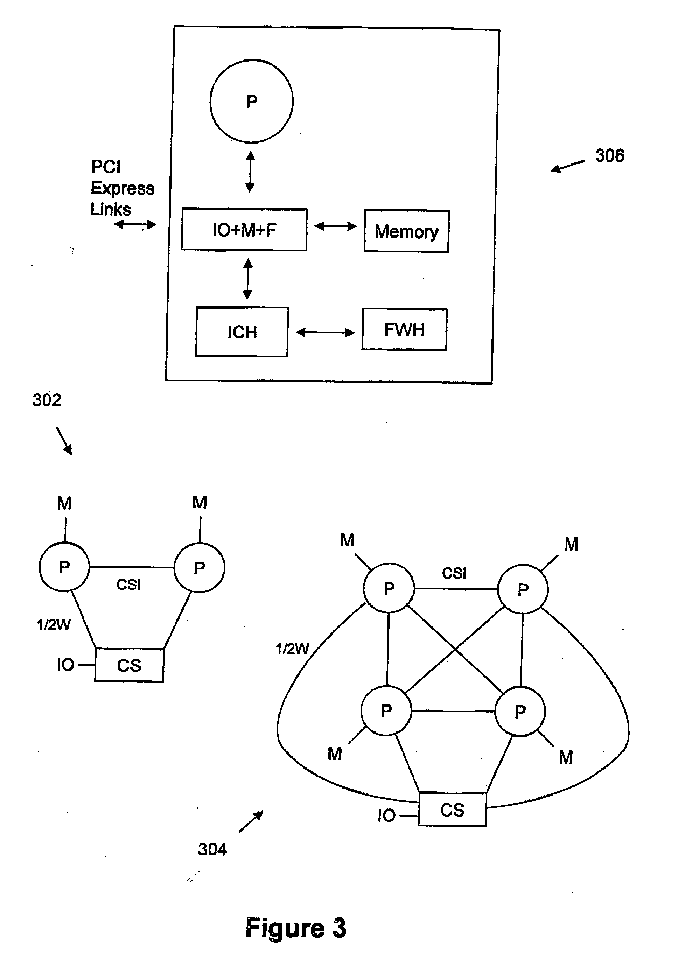

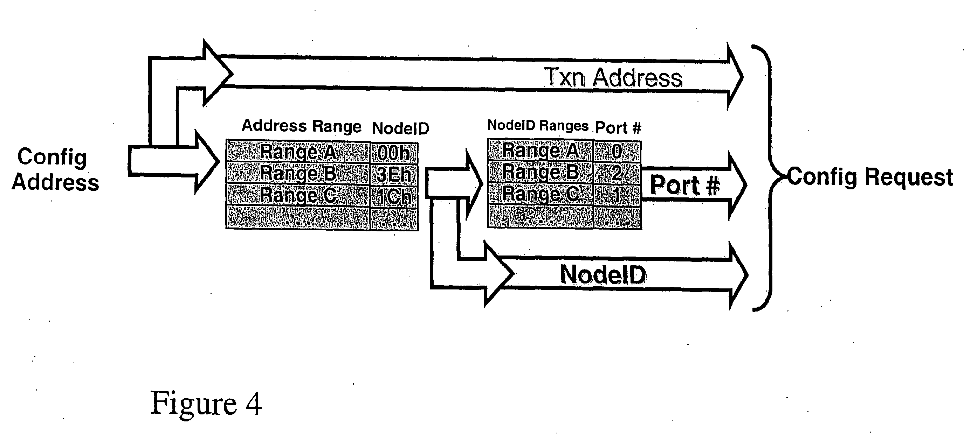

FIG. 2 is an apparatus to facilitate configuration of an integrated device by a processor in accordance with the claimed subject matter. The apparatus depicts a decoder in processor 1. The decoder is discussed further in connection with Figure 4. In one embodiment, the decoder internally converts a memory or IO access for configuration to a configuration cycle. In contrast, the prior art facilitates the chipset translating the configuration cycle. Subsequently, the configuration cycle is routed either to a chipset or to the integrated device in processor 2 based at least in part on routing information. In the embodiment for routing the configuration cycle to the chipset, the chipset receives the configuration access from the decoder via a network fabric. Subsequently, the chipset forwards the translated configuration access via a PCI or PCI Express Interconnect. In the other embodiment for routing the configuration cycle to the integrated device, the integrated device receives the configuration access via a network fabric. In both of the previous embodiments, the routing of the configuration cycle to either the chipset or integrated device is based at least in part on the routing information. The network fabric is discussed in further detail in connection with Figure 3.

Therefore, an integrated device may be configured while using the existing configuration mechanisms for the PCI or PCI Express interconnects. Furthermore, the claimed subject matter does not suffer from processor affinity issues since the entire configuration space is globally visible to all components (i.e. all devices are visible to all processors). Therefore, the claimed subject matter enables processor and/or network components with integrated devices in multi-processor systems to be configured by existing shrink-wrap operating systems.

In another embodiment for use for a PCI-Express example, there is a bridge from the chipset to Processor 2. Upon receiving the configuration access, the chipset forwards the configuration access to processor 2.

In one embodiment, the method for configuration depicted in Figure 2 is incorporated and implemented in software. For example, the software may be stored in an electronically-accessible medium that includes any mechanism that provides (i.e., stores and/or transmits) content (e.g., computer executable instructions) in a form readable by an electronic device (e.g., a computer, a personal digital assistant, a cellular telephone).For example, a machine-accessible medium includes read only memory (ROM); random access memory (RAM); magnetic disk storage media; optical storage media; flash memory devices; electrical, optical, acoustical or other form of propagated signals (e.g., carrier waves, infrared signals, digital signals).

Figure 3 depicts a point to point system with one or more processors. The claimed subject matter comprises several embodiments, one with one processor 306, one with two processors (P) 302 and one with four processors (P) 304. In embodiments 302 and 304, each processor is coupled to a memory (M) and is connected to each processor via a network fabric which may comprise either or all of: a link layer, a protocol layer, a routing layer, a transport layer, and a physical layer. The fabric facilitates transporting messages from one protocol (home or caching agent) to another protocol for a point to point network. As previously described, the system of a network fabric supports any of the embodiments depicted in connection with embodiments depicted in Figures 2 and 4..

For embodiment 306, the uni-processor P is coupled to graphics and memory control, depicted as IO+M+F, via a network fabric link that corresponds to a layered protocol scheme. The graphics and memory control is coupled to memory and is capable of receiving and transmitting via PCI Express Links. Likewise, the graphics and memory control is coupled to the ICH. Furthermore, the ICH is coupled to a firmware hub (FWH) via a LPC bus. Also, for a different uni-processor embodiment, the processor would have external network fabric links. The processor may have multiple cores with split or shared caches with each core coupled to a Xbar router and a non-routing global links interface. Thus, the external network fabric links are coupled to the Xbar router and a non-routing global links interface.

Figure 4 is a decoder as utilized by one embodiment. In one embodiment, the decoder receives a configuration address (config address). In this embodiment, the config address may come from either a memory address (e.g. IPF and PCI-E Enhanced Config) or from a register internal to the CPU.. If the config address is from a memory address, the Addr decoder indicates that it's a Config cycle. Otherwise, this is determined prior to the Addr decoder Based on the config address, a nodeID and a port number is retrieved and forwarded as part of the configuration request.

Although the claimed subject matter has been described with reference to specific embodiments, this description is not meant to be construed in a limiting sense. Various modifications of the disclosed embodiment, as well as alternative embodiments of the claimed subj ect matter, will become apparent to persons skilled in the art upon reference to the description of the claimed subject matter. It is contemplated, therefore, that such modifications can be made without departing from the scope of the claimed subject matter as defined in the appended claims.

## Claims

1. A method for configuring an integrated device in a first processor comprising:
converting, within a decoder of a second processor, a memory address or IO access address to a configuration cycle for configuration of the integrated device in the first processor, the second processor being directly coupled to the first processor, and
routing the configuration cycle to the integrated device by a network fabric directly coupling the first processor to the second processor, based at least in part on routing information.

2. A computer program product comprising computer code means adapted to perform all the steps of claim 1, when the computer code means is run on a computer.

3. A computer-readable medium embodying a computer program product as claimed in claim 2.

4. A second processor directly couplable to a first processor for configuring an integrated device in the first processor, the second processor **characterized by**:
a decoder arranged to convert either a memory address or IO configuration access address to a configuration cycle for configuration of the integrated device in the first processor; and
wherein the second processor is arranged to transmit the configuration cycle to the integrated device by a network fabric directly coupling the first processor to the second processor, based at least in part on routing information.

5. A system comprising:
a second processor with a decoder, directly coupled to a first processor or network component with an integrated device,
**characterized by**:
the decoder being arranged to convert either a memory address or IO configuration access to a configuration cycle for configuration of the integrated device; and
the second processor being arranged to transmit the configuration cycle to the integrated device by a network fabric directly coupling the first processor to the second processor, based at least in part on routing information, wherein the configuration cycle adheres to a PCI type interconnect.

6. The system of claim 5 wherein the PCI type interconnect is either PCI or PCI Express.

## Patentansprüche

1. Verfahren zur Konfiguration einer integrierten Vorrichtung in einem ersten Prozessor, wobei das Verfahren folgendes umfasst:
in einem Decodierer eines zweiten Prozessors, das Umwandeln einer Speicheradresse oder einer EA-Zugriffsadresse in einen Konfigurationszyklus zur Konfiguration der integrierten Vorrichtung in dem ersten Prozessor, wobei der zweite Prozessor direkt mit dem ersten Prozessor gekoppelt ist; und
das Routing des Konfigurationszyklus durch eine Netzwerkstruktur zu der integrierten Vorrichtung, wobei der erste Prozessor direkt mit dem zweiten Prozessor gekoppelt wird, zumindest teilweise auf der Basis der Routing-Informationen.

2. Computerprogrammprodukt, das eine Computercodeeinrichtung umfasst, die in der Lage ist, alle Schritt aus Anspruch 1 auszufahren, wenn die Computercodeeinrichtung auf einem Computer ausgeführt wird.

3. Computerlesbares Medium, das ein Computerprogrammprodukt gemäß Anspruch 2 verkörpert.

4. Zweiter Prozessor, der direkt mit einem ersten Prozessor gekoppelt werden kann, um eine integrierte Vorrichtung in dem ersten Prozessor zu konfigurieren, wobei der zweite Prozessor **gekennzeichnet ist durch**:
einen Decodierer, der so angeordnet ist, dass er entweder eine Speicheradresse oder eine EA-Konfigurationszugriffsadresse in einen Konfigurationszyklus umwandelt, zur Konfiguration der integrierten Vorrichtung in dem ersten Prozessor; und
wobei der zweite Prozessor so angeordnet ist, dass er den Konfigurationszyklus zu der integrierten Vorrichtung übermittelt, und zwar über eine Netzwerkstruktur, welche den ersten Prozessor mit dem zweiten Prozessor koppelt, zumindest teilweise auf der Basis von Routing-Informationen.

5. System, das folgendes umfasst:
einen zweiten Prozessor mit einem Decodierer, der direkt mit einem ersten Prozessor oder einer Netzwerkkomponente mit einer integrierten Vorrichtung gekoppelt ist;
**dadurch gekennzeichnet, dass**:
der Decodierer so angeordnet ist, dass er eine Speicheradresse oder einen EA-Konfigurationszugriff in einen Konfigurationszyklus zur Konfiguration der integrierten Vorrichtung umwandelt; und
der zweite Prozessor so angeordnet ist, dass er den Konfigurationszyklus zu der integrierten Vorrichtung übermittelt, und zwar über eine Netzwerkstruktur, welche den ersten Prozessor direkt mit dem zweiten Prozessor koppelt, zumindest teilweise auf der Basis von Routing-Informationen, wobei der Konfigurationszyklus an eine PCI-Zwischenverbindung angebunden ist.

6. System nach Anspruch 5, wobei es sich bei der PCI-Zwischenverbindung entweder um eine PCI- oder PCI Express-Zwischenvezbindung handelt.

## Revendications

1. Procédé pour configurer un dispositif intégré dans un premier processeur comprenant les étapes consistant à :
convertir, dans un décodeur d'un second processeur, une adresse mémoire ou adresse d'accès IO à un cycle de configuration pour la configuration du dispositif intégré dans le premier processeur, le second processeur étant directement couplé au premier processeur ; et
acheminer le cycle de configuration au dispositif intégré par une structure de réseau couplant directement le premier processeur au second processeur, sur la base au moins en partie d'informations de routage.

2. Produit de programme informatique comprenant des moyens de code informatique adaptés pour effectuer toutes les étapes de la revendication 1, lorsque les moyens de code informatique sont exécutés sur un ordinateur.

3. Support lisible par ordinateur intégrant un produit de programme informatique selon la revendication 2.

4. Second processeur pouvant être directement couplé à un premier processeur pour configurer un dispositif intégré dans le premier processeur, le second processeur étant **caractérisé par** :
un décodeur agencé pour convertir une adresse mémoire ou une adresse d'accès de configuration IO à un cycle de configuration pour la configuration du dispositif intégré dans le premier processeur, et
dans lequel le second processeur est agencé pour transmettre le cycle de configuration au dispositif intégré par une structure de réseau couplant directement le premier processeur au second processeur, sur la base au moins en partie d'informations de routage.

5. Système comprenant :
un second processeur avec un décodeur, directement couplé à un premier processeur ou à un composant de réseau avec un dispositif intégré,
**caractérisé en ce que** :
le décodeur est agencé pour convertir une adresse mémoire ou une adresse d'accès de configuration IO à un cycle de configuration pour la configuration du dispositif intégré, et
le second processeur est agencé pour transmettre le cycle de configuration au dispositif intégré par une structure de réseau couplant directement le premier processeur au second processeur, sur la base au moins en partie d'informations de routage, dans lequel le cycle de configuration adhère à une interconnexion de type PCI.

6. Système selon la revendication 5, dans lequel l'interconnexion de type PCI est une PCI ou PCI Express.
